# EUROPEAN PATENT SPECIFICATION

(11) **EP 2 853 742 B1**
(45) Date of publication and mention of the grant of the patent: **20.04.2016**
(21) Application number: 13186321.9
(22) Date of filing: 27.09.2013
(51) Int. Cl.: F04B 39/02, F04B 49/06, F04B 51/00, F04B 53/18, F16N 19/00, F04C 28/28

(54) **Method and apparatus for oil sensing in a compressor**
Verfahren und Vorrichtung zur Ölmessung in einem Kompressor
Procédé et appareil de détection d'huile dans un compresseur

(43) Date of publication of application: 01.04.2015
(73) Proprietor: Emerson Climate Technologies GmbH, 13509 Berlin (DE)
(72) Inventor: Dor, Aurélien, 4671 Saive (BE); Pirenne, Francis, 4840 Welk (BE); Zhao, Haibin, 4000 Liege (BE)
(74) Representative: Hohgardt, Martin

(56) References cited:
- US-A- 3 232 519
- US-A- 6 082 971
- US-A1- 2005 235 660
- US-B1- 6 406 265

## Description

The current invention relates in general to a method and an apparatus for oil sensing in a compressor.

Compressors are used in a plurality of technical areas in industrial environments as well as in domestic environments mainly for increasing the pressure of a gas or a liquid. In any of the foregoing fields of application, the compressor shall provide steady performance during operation time. For that reason, it is important to constantly monitor the lubrication properties of the oil in the compressor to allow smooth operation of the compressor. During the operation of the compressor, it is possible that the compressor looses oil, that the quality of the oil degrades, for example, due to contamination and/or that the oil can not be delivered to all necessary areas, for example, if dirt blocks the passage of the oil. In all of the aforementioned cases, compressor operation will be adversely affected.

US 6,276,901 B1 describes a combination of a sight glass and an optical sensor in a housing of a hermetically sealed compressor to allow both visual inspection of the oil level as well as automatic sensing of the oil level. However, only the level of the oil can be inspected using the proposed combination of the sight glass and the sensor. Other problems, such as degradation of the quality of the oil or oil delivery problems can not be identified by these means.

US 2006/0013697 A1 describes a compressor using a sensor for detecting a position of the oil surface inside the compressor. The detection is done with two temperature sensors that are mounted in the oil sump of the compressor to detect on the one hand the temperature of gas refrigerant and on the other hand the temperature of the oil. The position of the oil surface is then determined based on the difference in temperatures between oil and refrigerant. Again, this approach only helps to monitor the level of the oil, while the other problems identified above can not be addressed.

A compressor diagnostic system that monitors a variety of operational parameters is described in US 6,406,265 B1.

Nevertheless, there is a need for efficient oil sensing in compressors which also considers the above-mentioned lubrication problems. This need is fulfilled by the method according to independent claim 1 and the apparatus according to independent claim 8.

The method according to the present invention comprises determining a temperature of an oil inside a compressor, determining a temperature at a moveable part of the compressor and deriving whether the compressor operates in a safe mode or in an unsafe mode based on an analysis of the determined oil temperature and the determined temperature at the moveable part.

Such compressors operate in different states, at different operating conditions and at different ambient conditions. The different states could be realized, for example, by different speeds of the compressor. The different operating conditions may be defined, for example, by different suction temperatures and/or suction pressures. With respect to the ambient conditions, the compressors could be used, for example, at ambient conditions such as environmental temperatures of -30° Celsius up to 60° Celsius. This has the consequence that at certain states under certain conditions some temperatures indicate an upcoming false operation of the compressor, while at the same state under other conditions the same temperature indicates a safe operation of the compressor.

The present invention considers this by using at least two temperatures for the analysis, whether the compressor is in a safe or in an unsafe mode.

According to the invention, a temperature of the oil inside the compressor is determined. Here, oil serves as a lubricant to reduce friction between the compressors moveable parts. As alternative or in addition, the oil may be used for heat transfer purposes. Thereby, the term oil refers to any mineral or organic oils with or without additives as well as to any synthetic liquids, i.e. to any kind of suitable means that can be used for lubrication and/or heat transfer. The temperature of the oil inside the compressor could be determined based on a direct measurement or could be determined by deriving other indicators, which may be also designated as indirect measurement. The direct measurement could be carried out by any suitable temperature sensor such as by thermocouples or thermistors. The temperature of the oil could be derived, for example, based on temperatures measured in the neighborhood of the oil, for example by measuring the temperature of a wall or other parts of the oil sump or other oil reservoirs or pumps.

In a preferred embodiment of the present invention, the temperature of the oil inside the compressor is determined in an area of the compressor where oil is collected. For example, this could be an oil sump in the compressor. Preferably, the temperature is determined in the lower part of that area where oil is collected. For an oil sump, this could be at the bottom of the oil sump, such that even if there is little oil left, the oil temperature will be measured and not the temperature of the surroundings. However, there are also several other areas in a compressor, where the temperature of the oil could be determined, for example in other oil reservoirs or oil pumps.

According to the invention, a temperature at a moveable part of the compressor is also determined. As already explained in context with the oil temperature, the temperature at the moveable part could be determined based on a direct measurement or could be determined by deriving other indicators, i.e. by indirect measurement. The moveable part is a part, preferably, inside the compressor housing which moves at least during the operation of the compressor. Such a moveable part makes a movement, such as a rotation, a movement back and forth, an orbiting motion, or a combination thereof. Determining a temperature at the moveable part may also encompass determining the temperature of the moveable part itself. Alternatively, determining the temperature of the moveable part may, for example, encompass determining the temperature of a mating stationary part. The temperature of the mating stationary part is preferably measured as close as possible to the contact surface with the moveable part. The above examples give either a direct indication of the temperature at the moveable part or at least an indirect indication. Determining the temperature at or of the moveable part may be performed by a contact-free temperature measurement, for example by ease of an infrared measuring sensor.

According to a preferred embodiment of the present invention, at least a part of the moveable part is lubricated by oil. However, further embodiments are possible. For example, the movement of a part related to the moveable part is lubricated by means of oil. Such a part related to the moveable part may be, for example, an axis of a pivoting moveable part. Please note that the term oil is used in accordance with the above explanations. Preferably, the oil used for lubrication is in direct liquid contact with the remaining oil inside the compressor which temperature is determined, for example the oil in the oil sump, such that the oil used for lubrication is the same oil as the remaining oil in the compressor. However, in another example, the oil used for lubricating the moveable part or parts related to the moveable part may also only be in indirect connection with the remaining oil in the compressor, for example, the two oils may only be in contact via a heat exchanger. Thereby, the two oils may also be different oils.

According to the invention, based on the determined temperature of the oil and based on the determined temperature at the moveable part, it is derived whether the compressor operates in a safe mode or in an unsafe mode. Preferably, the term unsafe mode as used in the present invention indicates a state of compressor operation that will, when continued for a certain period of time, cause severe damage to the compressor at a whole or at least to parts of the compressor. One reason for the occurrence of the unsafe mode may be a lack of lubrication, regardless whether the lack of lubrication is caused by a loss of oil, a degrading quality of the oil which may be due to a high amount of refrigerant in the oil/refrigerant mixture and/or due to blocking in the oil flow, which causes an overheating of certain parts on the compressor. Another reason for the occurrence of the unsafe mode could be liquid flood back into the compressor.

The safe mode and the unsafe mode are mentioned as mutual exclusive alternatives, such that it is sufficient, when only one of the two modes is derived. However, in a preferred embodiment of the present invention both modes, i.e. the safe mode and the unsafe mode may be derived. In a further preferred embodiment, additional modes may be derived based on the determination of the oil temperature, on the temperature at the moveable part and, if necessary, based on further indications. The person skilled in the art knows several ways, how one or more modes may be derived based on the two temperatures and which modes in between the two mutual exclusive alternatives may be necessary. For example, a database may be used with ranges of the oil temperatures and related ranges of temperature at the moveable parts which define safe modes or unsafe modes or further modes. In a further example, an equation may be used to calculate based on the determined temperatures a safety value which indicates when compared to a safety value boundary whether the compressor operates in a safe or in an unsafe mode.

Although two steps of the method according to the invention relate to determining a temperature, it is not necessary that the actual temperature in Celsius or Fahrenheit is determined at any point. It is sufficient if a physical quantity of an arbitrary physical property is determined, which allows to infer the temperatures.

In a further preferred embodiment, when the oil in the compressor and the oil for lubricating the moveable part or at least a part of the moveable part are in liquid contact, then there may be an oil path along which the oil travels. Such an oil path may be mainly inside the compressor. However, it is also possible that some parts of the oil path are outside the housing of the compressor. The oil may travel along the oil path at least temporarily during operation of the compressor. In a preferred embodiment of the invention, oil travels along an oil path to lubricate the moveable part or a part related to the moveable part. In the oil path, the oil could be delivered by frictional forces from one area, for example the area where oil is collected, to at least one area that needs lubrication. Alternatively, the oil may be delivered by other suitable means, such as, for example, by vacuum pumping, impeller pumping or centrifugal pumping.

In a further preferred embodiment, the compressor used in connection with the present invention is a scroll compressor. In a scroll compressor two interleaving scrolls are responsible for taking in fluids, compressing the fluids and discharging the compressed fluids. One of the interleaving scrolls may be fixed, while the other scroll orbits eccentrically inside the scroll that is fixed. The orbiting scroll may orbit relative to a fixed bearing, for example a thrust plate. Both scrolls may be also co-rotating to achieve the relative motion. Advantageously, scroll compressors are more reliable than conventional compressors, such as reciprocating or wobble-plate compressors. However, the present invention may also be used in connection with other compressor technologies, such as screw compressors or piston compressors.

In a further preferred embodiment, the moveable part is the orbiting scroll of a scroll compressor. Here, the orbiting scroll is orbiting relative to a thrust plate. Due to the orbiting movement of the orbiting scroll and the axial load on the thrust plate, high forces are induced onto the contact surfaces of the orbiting scroll and the thrust plate. Therefore, it is indispensable that the contact surfaces of the orbiting scroll and the thrust plate are always well lubricated during operation of the compressor. The inventors have discovered that a lack of lubrication results in a quick increase of the temperature at the moving part, i.e. in the present example at the orbiting scroll. Therefore, for example, the temperature of the orbiting scroll may be determined. The temperature of the orbiting scroll may be determined by ease of contact-free measurements. Alternatively, a temperature sensor may be part of the orbiting scroll to determine the temperature of the orbiting scroll.

The present invention uses the discovery that the relationship between a temperature at a moveable part in the compressor and the temperature of the oil, in particular the temperature of the oil in the area where the oil is collected, for example the oil sump, indicates whether the lubrication at the moveable part is sufficient or not. This is the case, since a lack of lubrication at the moveable part will increase frictional forces and therefore the temperatures at the moveable part and related parts will rise. However, high or low temperatures at the moveable part alone are not always an indication for an unsafe mode. For this reason, the oil temperature of the oil in the compressor is used as further reference. This eliminates the adverse effects that varying states and/or conditions may have on the certainty of determining in which mode the compressor is operating in. This is especially important, since the compressor may be deployed in different ambient conditions. In addition, it also eliminates the adverse effects that different operating conditions such as the suction gas temperature and/or pressures may have on the determining of the operating mode.

In accordance with the present invention, additional parameters or indicators could be used to derive the mode of the compressor. For example, a suction temperature, a discharge temperature, a suction pressure and/or a discharge pressure may be used. All of these parameters or indicators help to derive the mode of the compressor, since they will likely change correspondingly to the different compressor operation modes. Information about the operation mode of the compressor is helpful to prevent that a lubrication problem is detected although the compressor runs in a safe mode. For example, in the time period immediately after starting the compressor, the two determined temperatures may not change at the same speed and may therefore cause an unsafe mode detection. The same may be the case, if there is a fast transition. As an example, the compressor may be in a transient operation mode or in a stable operation mode. In accordance with an embodiment of the present invention, a stable operation mode may be detected, if the change of the discharge temperature over time is below a certain threshold. In such a case, the oil detection may be active. If the change of the discharge temperature over time is above the threshold value or above a further threshold value, the compressor is considered to be in a transient mode and the oil detection may be not active. As explained above in connection with other temperatures, the discharge temperature or the change of the discharge temperature over time could be determined based on direct measurement or based on indirect measurement.

In a further preferred embodiment, the temperature at the moveable part is determined at a stationary part of the compressor being in contact with the moveable part. For example, the temperature can be measured at the thrust plate. Preferably, a surface of the thrust plate is in direct contact with a surface of the orbiting scroll, wherein the contact surfaces are preferably lubricated by oil. From an installation perspective, it is easier to install sensor equipment in a stationary part of the compressor which is subject to lower vibrational forces. Thus, this installation location has the advantage that the life span of the sensor equipment can be increased. However, alternatively or additionally also the temperature of the moveable part itself may be determined by ease of contact-free measurement sensors or sensors built in the moveable part.

Also other physical quantities may allow to infer the temperature of the moveable part itself or at least at the moveable part.

In yet another preferred embodiment, the mode of the compressor is not only derived based on the current temperatures of the oil and at the moving part. Preferably, besides the current temperatures, at least one past temperature of the oil and/or at/of the moveable part is considered. For example, the temperature at the moveable part may be used to calculate a theoretical oil temperature. In one embodiment, the temperature difference between the measured oil temperature and the calculated theoretical oil temperature is integrated over time to indicate whether the compressor is in a safe or in an unsafe mode. Advantageously, using past values to determine the unsafe mode can provide an indication of an upcoming problem much earlier and much more reliable. In yet another preferred embodiment the ambient condition of the compressors environment and/or the compressor condition are determined and used together with the determined oil temperature and the temperature at/of the moveable part to derive whether the compressor operates in a safe or unsafe mode.

In another preferred embodiment, the method further comprises the step of stopping the compressor, if it is derived that the compressor operates in an unsafe mode. This prevents that the compressor is damaged due to a lack of oil or due to deteriorating lubrication properties of the oil-refrigerant mixture.

In another preferred embodiment of the method the deriving whether the compressor operates in a safe mode or in an unsafe further comprises deriving a warning mode. Advantageously, such a warning mode can be an intermediary mode that signals an operator that something is wrong, without having to shut down the compressor. For example, the warning mode can be determined as a result of a minor deviation of the safety value over a certain period of time.

In a preferred embodiment of the invention, the method further comprises determining the vibration of the compressor and the step of deriving whether the compressor operates in a safe mode or in an unsafe mode is also based on an analysis of the determined vibration. Advantageously, the vibration may serve as an additional parameter for the deriving whether the compressor operates in a safe mode or in an unsafe mode. Thereby, the accuracy of the deriving can be increased.

Further, an apparatus according to the present invention comprises means for determining a temperature of an oil inside a compressor, means for determining a temperature at a moveable part of the compressor, and means for deriving whether the compressor operates in a safe mode or in an unsafe mode based on an analysis of the determined oil temperature and the determined temperature at the moveable part.

This apparatus can be advantageously installed in part or completely within a compressor. The means for determining could be realized by sensor means such as commercial temperature sensors. Examples for such sensor means are resistance thermometers, whose ohmic resistance varies with the temperature, thermocouples which produce a voltage when heated or contact-free sensors like infrared sensors. The means for deriving could be realized, for example, by a microcontroller or on some other integrated circuit that is located inside or outside of the compressor. Alternatively, the means for deriving could be part of a larger "health monitoring" system.

In the following the invention is further described by reference to the schematic illustrations shown in the figures, wherein:
- Figure 1: is a cross sectional view of an embodiment of the apparatus according to the invention installed in a compressor; and
- Figure 2: is a magnified cross sectional view of an embodiment of second sensor means of the apparatus according to the invention as shown in Fig. 1 installed inside a compressor.

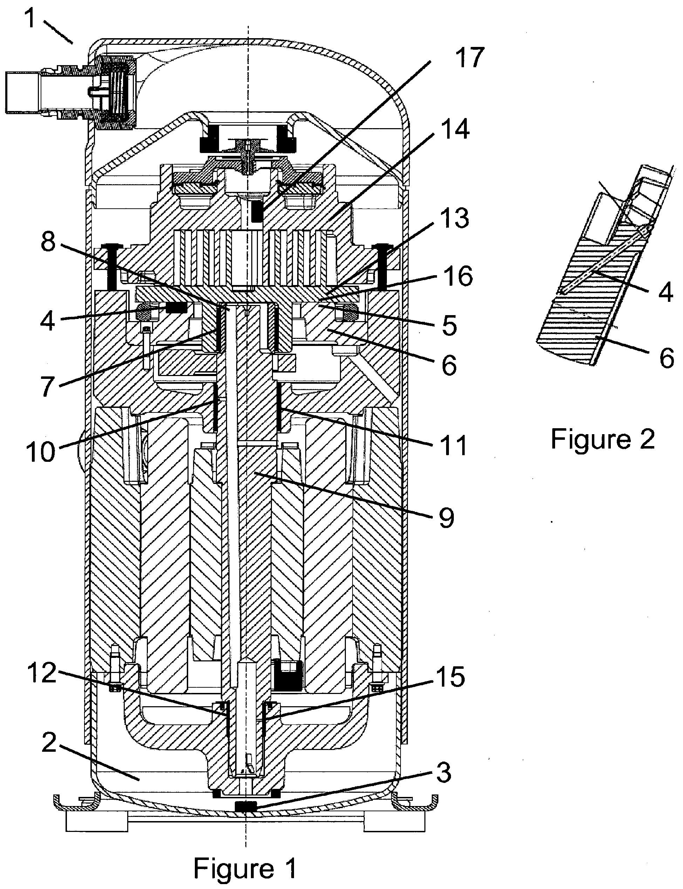

Figure 1 shows a cross sectional view of a scroll compressor 1 which could be used in connection with the method according to the present invention and with the apparatus according to the present invention. In the here shown embodiment, the compressor 1 comprises an area 2 where oil is collected, i.e. an oil sump.

Further, the compressor 1 comprises a first means for determining 3 a temperature of the oil. This first means for determining 3 provides an indication for the temperature of the oil. The first means for determining 3 could be, for example, a temperature sensor. In the shown example, the first means for determining 3 is installed on the very bottom of area 2 where oil is collected in the compressor 1 to ensure that the oil temperature is measured and not the temperature of the surrounding gas when the oil level is very low. However, as explained above, other mounting locations are possible. Further, the first means for determining 3 may determine the temperature either via contact or contact-free.

The compressor in figure 1 comprises also a second means for determining 4 of a temperature at a moveable part of the compressor 1. The second means for determining 4 could also be a temperature sensor. The second means for determining 4 could be placed at a moveable part or close to a moveable part of the compressor in order to be able to determine an indication of the temperature at or of the moveable part. In the example shown in figure 1, the moveable part is a orbiting scroll 13 and the second means for determining 4 is located in or at a stationary part of the compressor 1, namely a thrust plate 6. Here, the temperature that arises due to the friction between a surface 5 of the thrust plate 6 and a surface 16 of the orbiting scroll 13 is measured close to the contact surface 5 of the thrust plate 6. As it can be seen from figure 1, the thrust plate 6 supports the orbiting scroll 13 that moves relatively to a fixed scroll 14 when the compressor 1 is in operation. Therefore, the contact surfaces 16, 5 of the orbiting scroll 13 and the thrust plate 6 are subject to high frictional forces. Alternatively to the aforementioned mounting location, the second means for determining 4 could, for example, also be installed to measure the temperature at the drive bearing 7, the main journal bearing 11, or the lower journal bearing 12. Thereby, the second means for determining 4 may determine the temperature either via contact or contact-free.

In the example that is shown in figure 1, an oil path through the compressor 1 can also be seen. The oil path origins in the area 2 where oil is collected, i.e. oil sump, from where the oil is hoisted up into the upper part of the compressor 1 to lubricate a plurality of bearings along its flow back down to the area 2. The oil is pumped up by a centrifugal force through the inner hole of the crankshaft 9, where it exits the crankshaft 9 though three openings a top shaft oil opening 8, a main bearing oil opening 10, and a lower bearing oil opening 15 to lubricate the bearings.

Advantageously, the mounting location of the second means for determining 4 should be located closer to the top shaft oil opening 8 than to the oil sump 2. This is the case, since the top shaft oil opening 8 is located at a point of the oil path which furthest away from the oil sump.

In the example shown in Figure 1, the compressor comprises also means for determining the discharge temperature 17.

Figure 2 is a magnified cross sectional view of the mounting location of the second means for determining 4, as shown in figure 1. In the shown example a hole is made into the material of the thrust plate 6 that accommodates the second means for determining 4. The hole extends almost to the surface of the thrust plate 6 that is in contact with the moveable part 5. Alternatively, to the example as shown in figure 2, the second means for determining 4 can be also attached to the stationary part 6 by other means, for example it may be glued or screwed to the stationary part 6. Alternatively, the second means for determining 4 may also be located in the orbiting scroll 13.

## Claims

1. A method comprising:
determining a first temperature of an oil inside a compressor (1);
determining a second temperature at a moveable part of the compressor (1) which moves during the operation of the compressor (1), wherein the second temperature at the moveable part is determined at a stationary part (4) of the compressor (1) being in contact with the moveable part; and
deriving whether the compressor (1) operates in a safe mode or in an unsafe mode based on a relationship of the determined first temperature and the determined second temperature at the moveable part.

2. The method of claim 1, wherein the first temperature of the oil inside the compressor (1) is determined in an area (2) where oil is collected.

3. The method of any of claims 1 or 2, wherein the moveable part is lubricated by oil.

4. The method of claim 3, wherein the oil which temperature is determined travels along an oil path to lubricate the moveable part.

5. The method of any of claims 1 to 4, wherein the moveable part is an orbiting scroll (13) of a scroll compressor.

6. The method of claim 1, wherein the method further comprises determining a vibration of the compressor (1), and wherein the step of deriving whether the compressor (1) operates in a safe mode or in an unsafe mode is also based on an analysis of the determined vibration.

7. An apparatus comprising:
means for determining a first temperature of an oil inside a compressor (1);
means for determining a second temperature at a moveable part of the compressor (1) which moves during the operation of the compressor (1), **characterized in that**, the second temperature at the moveable part is determined at a stationary part (4) of the compressor (1) being in contact with the moveable part; and by means for deriving whether the compressor (1) operates in a safe mode or in an unsafe mode based on a relationship of the determined first temperature and the determined second temperature at the moveable part.

8. The apparatus of claim 7, wherein the first temperature of the oil inside the compressor (1) is determined in an area (2) where oil is collected.

9. The apparatus of any of claims 7 or 8, wherein the moveable part is a part of the compressor (1) which is lubricated by oil.

10. The apparatus of claim 9, wherein the oil which temperature is determined travels along an oil path to lubricate the moveable part.

11. The apparatus of any of claims 7 to 10, wherein the moveable part is an orbiting scroll (13) of a scroll compressor.

12. The apparatus of any of claims 7 to 11, wherein the apparatus further comprises means for determining a vibration of the compressor (1), and wherein the deriving of the means for deriving whether the compressor (1) operates in a safe mode or in an unsafe mode is also based on an analysis of the determined vibration.

## Patentansprüche

1. Ein Verfahren aufweisend:
Bestimmten einer ersten Temperatur von einem Öl innerhalb eines Kompressors (1);
Bestimmen einer zweiten Temperatur an einem beweglichen Teil von dem Kompressor (1), welches sich bewegt während der Operation von dem Kompressor (1), wobei die zweite Temperatur an dem beweglichen Teil bestimmt wird an einem stationären Teil (4) von dem Kompressor (1), der in Kontakt ist mit dem beweglichen Teil; und
Herleiten, ob der Kompressor (1) in einem sicheren Modus oder in einem unsicheren Modus operiert basierend auf einer Beziehung von der bestimmten ersten Temperatur und der bestimmten zweiten Temperatur an dem beweglichen Teil.

2. Das Verfahren nach Anspruch 1, wobei die erste Temperatur von dem Öl innerhalb des Kompressors (1) bestimmt wird, in einem Bereich (2) in dem Öl gesammelt wird.

3. Das Verfahren nach jeglichem der Ansprüche 1 oder 2, wobei der bewegliche Teil durch Öl geschmiert wird.

4. Das Verfahren nach Anspruch 3, wobei das Öl dessen Temperatur bestimmt wird sich entlang eines Ölpfades bewegt zum Schmieren des beweglichen Teils.

5. Das Verfahren nach jeglichem der Ansprüche 1 bis 4, wobei der bewegliche Teil eine kreisende Schnecke (13) von einem Schneckenkompressor ist.

6. Das Verfahren nach Anspruch 1, wobei das Verfahren weiter aufweist, Bestimmen einer Vibration von dem Kompressor (1) und wobei der Schritt vom Herleiten, ob der Kompressor (1) in einem sicheren Modus oder in einem unsicheren Modus operiert auch basiert auf einer Analyse von der bestimmten Vibration.

7. Eine Vorrichtung aufweisend:
Mittel zum Bestimmen einer ersten Temperatur von einem Öl innerhalb eines Kompressors (1);
Mittel zum Bestimmen einer zweiten Temperatur an einem beweglichen Teil von dem Kompressor (1), welches sich bewegt während der Operation von dem Kompressor (1) **gekennzeichnet dadurch, dass** die zweite Temperatur an dem beweglichen Teil bestimmt wird an einem stationären Teil (4) von dem Kompressor (1), der in Kontakt ist mit dem beweglichen Teil; und
durch Mittel zum Herleiten, ob der Kompressor (1) in einem sicheren Modus oder in einem unsicheren Modus operiert basierend auf einer Beziehung von der bestimmten ersten Temperatur und der bestimmten zweiten Temperatur an dem beweglichen Teil.

8. Die Vorrichtung nach Anspruch 7, wobei die erste Temperatur von dem Öl innerhalb des Kompressors (1) bestimmt wird in einem Bereich (2) in dem Öl gesammelt wird.

9. Die Vorrichtung nach jeglichem der Ansprüche 7 oder 8, wobei der bewegliche Teil ein Teil von dem Kompressor (1) ist, der durch Öl geschmiert wird.

10. Die Vorrichtung nach Anspruch 9, wobei das Öl dessen Temperatur bestimmt wird sich entlang eines Ölpfades bewegt zum Schmieren des beweglichen Teils.

11. Die Vorrichtung nach jeglichem der Ansprüche 7 bis 10, wobei der bewegliche Teil eine kreisende Schnecke (13) von einem Schneckenkompressor ist.

12. Die Vorrichtung nach jeglichem der Ansprüche 7 bis 11, wobei die Vorrichtung weiter aufweist, Mittel zum Bestimmen einer Vibration von dem Kompressor (1) und wobei das Herleiten von dem Mittel zum Herleiten, ob der Kompressor (1) in einem sicheren Modus oder in einem unsicheren Modus operiert, auch basiert auf einer Analyse von der bestimmten Vibration.

## Revendications

1. Un procédé comprenant :
la détermination d'une première température d'une huile à l'intérieur d'un compresseur (1) ;
la détermination d'une seconde température au niveau d'une pièce mobile du compresseur (1) qui se déplace durant le fonctionnement du compresseur (1), la seconde température au niveau de la pièce mobile étant déterminée au niveau d'une partie fixe (4) du compresseur (1) qui est en contact avec la pièce mobile ; et
la déduction si le compresseur (1) opère en un mode sûr ou dans un mode non sûr sur la base d'une relation entre la première température déterminée et la seconde température déterminée au niveau de la pièce mobile.

2. Le procédé de la revendication 1, dans lequel la première température de l'huile à l'intérieur du compresseur (1) est déterminée dans une zone (2) où l'huile est recueillie.

3. Le procédé de l'une des revendications 1 ou 2, dans lequel la pièce mobile est lubrifiée par l'huile.

4. Le procédé de la revendication 3, dans lequel l'huile dont la température est déterminée se déplace le long d'un trajet d'huile pour lubrifier la pièce mobile.

5. Le procédé de l'une des revendications 1 à 4, dans lequel la pièce mobile est une spirale excentrique (13) d'un compresseur à spirale.

6. Le procédé de la revendication 1, dans lequel le procédé comprend en outre la détermination d'une vibration du compresseur (1), et dans lequel l'étape de déduction si le compresseur (1) opère dans un mode sûr ou dans un mode non sûr est également basée sur une analyse de la vibration déterminée.

7. Un équipement comprenant :
des moyens de détermination d'une première température d'une huile à l'intérieur d'un compresseur (1) ;
des moyens de détermination d'une seconde température au niveau d'une pièce mobile du compresseur (1) qui se déplace durant le fonctionnement du compresseur (1),
**caractérisé en ce que** la seconde température au niveau de la pièce mobile est déterminée au niveau d'une partie fixe (4) du compresseur (1) qui est en contact avec la pièce mobile ;
et par des moyens de déduction si le compresseur (1) opère en un mode sûr ou dans un mode non sûr sur la base d'une relation entre la première température déterminée et la seconde température déterminée au niveau de la pièce mobile.

8. L'équipement de la revendication 7, dans lequel la première température de l'huile à l'intérieur du compresseur (1) est déterminée dans une zone (2) où l'huile est recueillie.

9. L'équipement de l'une des revendications 7 ou 8, dans lequel la pièce mobile est une partie du compresseur (1) qui est lubrifiée par l'huile.

10. L'équipement de la revendication 9, dans lequel l'huile dont la température est déterminée se déplace le long d'un trajet d'huile pour lubrifier la pièce mobile.

11. L'équipement de l'une des revendications 7 à 10, dans lequel la pièce mobile est une spirale excentrique (13) d'un compresseur à spirale.

12. L'équipement de l'une des revendications 7 à 11, dans lequel l'équipement comprend en outre des moyens de détermination des vibrations du compresseur (1), et dans lequel la déduction par les moyens de déduction si le compresseur (1) opère dans un mode sûr ou dans un mode non sûr est également basée sur une analyse de la vibration déterminée.
